# EUROPÄISCHE PATENTSCHRIFT

(11) **EP 3 932 755 B1**
(45) Veröffentlichungstag und Bekanntmachung des Hinweises auf die Patenterteilung: **04.10.2023**
(21) Anmeldenummer: 21180777.1
(22) Anmeldetag: 22.06.2021
(51) Int. Cl.: B60T 7/04, B60T 8/48, B60T 13/74

(54) **VERFAHREN UND SYSTEM ZUR RÜCKFÜHRUNG EINES BREMSPEDALS**
METHOD AND SYSTEM FOR THE RETRACTION OF A BRAKE PEDAL
PROCÉDÉ ET SYSTÉME DE RETOUR D'UNE PÉDALE DE FREINAGE

(30) Priorität: 03.07.2020 DE 102020208397
(43) Veröffentlichungstag der Anmeldung: 05.01.2022
(73) Patentinhaber: Volkswagen Aktiengesellschaft, 38440 Wolfsburg (DE)
(72) Erfinder: Schmalbruch, Michael, 38302 Wolfenbüttel (DE)

(56) Entgegenhaltungen:
- EP-A1- 1 437 275
- WO-A1-2020/120676
- DE-A1- 19 750 977
- DE-A1-102007 032 501
- DE-A1-102011 107 841
- DE-A1-102015 213 710
- US-B2- 9 296 369

## Beschreibung

Die vorliegende Erfindung betrifft ein Verfahren zur Rückführung eines Bremspedals. Ferner bezieht sich die Erfindung auf ein System zur Rückführung eines Bremspedals.

Es ist aus dem Stand der Technik bekannt, dass Bremskraftverstärker (nachfolgend kurz BKV bezeichnet) bei Fahrzeugen eingesetzt werden, um die Betätigungskraft an der Bremse des Fahrzeuges zu verringern, welche zum Erreichen der gewünschten Bremswirkung erforderlich ist. Ein herkömmlicher BKV ist bspw. aus der DE 10 2016 210 369 A1 bekannt. Darin ist auch eine mögliche Regelung einer Rückführung des Bremspedals beschrieben. Weitere derartige, Verfahren/Systeme sind aus den WO 2020/120676 A1, DE 10 2015 213710 A1 und DE 10 2007 032501 A1 ebenfalls bekannt.

Weiter ist es bekannt, dass Assistenzsysteme des Fahrzeuges eine autonome Abbremsung über den BKV initiieren können. Dabei kann das Bremspedal mit dem BKV derart gekoppelt sein, dass auch bei einer autonomen Abbremsung (ohne aktive Betätigung durch den Fahrer) das Bremspedal mitbewegt wird.

Es ist indessen ein Nachteil, dass es bei der Bewegung des Bremspedals zu einer störenden Akustik kommen kann. Insbesondere nach einer autonomen Abbremsung wird das Geräusch des Bremspedals bei der anschließenden Rückführung in die Ausgangsstellung als störend empfunden. Eine Reduzierung dieses Störgeräusches ist zwar durch konstruktive mechanische Anpassungen denkbar, allerdings auch technisch sehr aufwendig.

Es ist daher eine Aufgabe der vorliegenden Erfindung, die voranstehend beschriebenen Nachteile zumindest teilweise zu beheben. Insbesondere ist es eine Aufgabe der vorliegenden Erfindung, eine verbesserte und geräusch-optimierte Rückführung eines Bremspedals zu ermöglichen.

Die voranstehende Aufgabe wird gelöst durch ein Verfahren mit den Merkmalen des Anspruchs 1 und durch ein System mit den Merkmalen des Anspruchs 9. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen System, und jeweils umgekehrt, so dass bezüglich der Offenbarung zu den einzelnen Erfindungsaspekten stets wechselseitig Bezug genommen wird bzw. werden kann.

Die Aufgabe wird insbesondere gelöst durch ein Verfahren zur Rückführung eines Bremspedals bei einem Fahrzeug. Hierbei ist vorgesehen, dass die nachfolgenden Schritte durchgeführt werden, vorzugsweise nacheinander in der angegebenen Reihenfolge oder in beliebiger Reihenfolge, wobei die Schritte ggf. auch zeitlich zumindest teilweise parallel und/oder wiederholt durchgeführt werden können:
- Durchführen einer Erkennung einer Abschaltung einer automatischen Bremsanforderung, vorzugsweise zur Abschaltung einer Durchführung einer autonomen Abbremsung des Fahrzeuges, wobei bevorzugt die automatische Bremsanforderung zuvor das automatische Abbremsen des Fahrzeuges initiiert hat,
- Durchführen einer Erfassung wenigstens eines Situationsparameters, welcher für eine aktuelle Situation des Fahrzeuges spezifisch ist, also z. B. eine aktuelle Geschwindigkeit des Fahrzeuges und/oder einen Stillstand des Fahrzeuges und/oder ein Anfahren des Fahrzeuges indiziert,
- Durchführen einer Einstellung einer Geschwindigkeit (und/oder weiterer Regelgrößen und/oder einer Regelung) der Rückführung des Bremspedals in Abhängigkeit von dem wenigstens einen erfassten Situationsparameter, also insbesondere abhängig von der aktuellen Situation, und/oder der erkannten Abschaltung, bevorzugt dann, wenn die Abschaltung der autonomen Abbremsung erkannt wurde und/oder der Stillstand erkannt wurde.

Damit wird situationsabhängig die Geschwindigkeit der Rückführung, d. h. die Geschwindigkeit, mit welcher sich das Bremspedal bei der Rückführung bewegt und/oder die Dauer, nach welcher die Rückführung abgeschlossen ist, eingestellt. In anderen Worten kann jeder eingestellte Wert der Geschwindigkeit des Bremspedals bei der Rückführung abhängig von dem Situationsparameter und der Abschaltung sein. Dies hat den Vorteil, dass die mit der Rückführung verbundenen Effekte, bspw. störende Geräusche, situationsabhängig eingestellt und optimiert werden können.

Es ist insbesondere ein der Erfindung zugrundeliegender Gedanke, dass es nur für bestimmte Situationen notwendig ist, die Rückführung so anzupassen, dass dabei entstehende Geräusche verringert werden (dies wird nachfolgend auch als geräuschreduzierte Rückführung bezeichnet).

In anderen Worten muss die Rückführung des Bremspedals nicht stets so angepasst sein, dass die Geräusche vermieden werden. Insbesondere in solchen Situationen, in denen weitere Geräusche hinzukommen, kann auf die geräuschreduzierte Rückführung verzichtet werden.

Die störenden Geräusche des Bremspedals treten insbesondere bedingt durch höhere Geschwindigkeiten des Bremspedals bei der Rückführung auf. Durch die situationsabhängige Einstellung der Geschwindigkeit kann daher das Auftreten von störenden Geräuschen dann reduziert oder verhindert werden, wenn dies aufgrund der Situation des Fahrzeuges notwendig ist. Dies kann bspw. im Stillstand des Fahrzeuges oder bei langsamen Fahrgeschwindigkeiten der Fall sein. Anhand des Situationsparameters kann eine solche Situation erkannt werden, in welcher die Reduzierung und/oder Verhinderung der störenden Geräusche notwendig ist. Hingegen kann in anderen Situationen, wie bei einer manuellen Abbremsung des Fahrzeuges durch den Fahrer (d. h. eine Fahrerfußbremsung) beim Lösen des Bremspedals dieses schneller zurückfahren und somit das gewohnte Gefühl für den Fahrer geboten werden. Eine schlechtere Akustik wird in diesem Falle nicht als störend empfunden. Bei einer autonomen Bremsung wie einer Bremsung durch ein Fahrerassistenzsystem in den Stillstand kann hingegen das Bremspedal langsamer zurückfahren, um auf diese Weise die Akustik zu optimieren. In dieser Situation hat der Fahrer normalerweise kein Kontakt zum Bremspedal. Die Situationen, in welchen es zur Verlangsamung der Geschwindigkeit der Rückführung kommt, können z. B. vordefiniert sein, und die zugehörigen Daten wie Situationsparameter und/oder Schwellenwerte für diese in einem Datenspeicher nicht-flüchtig gespeichert sein. Die Situationen sind bspw. derart vordefiniert, dass bei diesen Situationen bei Reduzierung der Geschwindigkeit der Rückführung kein Nachteil für die Bremsleistung und den gewohnten Komfort beim Bremsen für den Fahrer entsteht. Dies ist insbesondere dann der Fall, wenn ein Kontakt des Fahrers mit dem Bremspedal in dieser Situation nicht notwendig ist, um das Abbremsen des Fahrzeuges zu steuern.

Das Durchführen der Einstellung kann vorteilhafterweise den nachfolgenden Schritt umfassen:
- Durchführen der Rückführung in der Form einer geräuschreduzierten Rückführung in Abhängigkeit von dem wenigstens einen erfassten Situationsparameter und/oder der erkannten Abschaltung.

Je nach (anhand des Situationsparameters) erkannter Situation kann also die Rückführung als geräuschreduzierte Rückführung ausgeführt werden. Diese wird vorteilhafterweise dadurch erreicht, dass hierbei die Geschwindigkeit bzw. die Geschwindigkeiten des Bremspedals bei der Rückführung niedriger sind als bei der nicht-geräuschreduzierten Rückführung. Konkret kann bei der geräuschreduzierten Rückführung vorgesehen sein, dass eine vordefinierte Geschwindigkeitsschwelle durch die Geschwindigkeit des Bremspedals nicht überschritten - also stets unterschritten - wird. Die Geschwindigkeitsschwelle kann dabei durch Versuche so ermittelt werden, dass hierbei die durch das Bremspedal erzeugten Geräusche einen gewünschten Geräuschpegel nicht überschreiten.

Die Rückführung umfasst bevorzugt eine mechanische Bewegung des Bremspedals von einer Bremsstellung in eine Ausgangsstellung (Ruhestellung). Eine manuelle Betätigung des Bremspedals zur Abbremsung kann dazu führen, dass das Bremspedal von der Ausgangsstellung in die Bremsstellung geführt wird. In der Bremsstellung wird dann ggf. durch ein Bremssystem des Fahrzeuges eine Bremskraft aufgebracht, es kommt also zur Bremsverzögerung beim Fahrzeug. In der Ausgangsstellung wird hingegen keine Bremskraft aufgebracht bzw. es kommt nicht zur aktiven Bremsverzögerung des Fahrzeuges. Diese Bewegung von der Ausgangsstellung in die Bremsstellung erfolgt auch dann, wenn nicht der Fahrer manuell, sondern das Fahrzeug selbst die Abbremsung autonom durchführt, also eine Bremsanforderung ausgegeben wird. Entsprechend wird nach Abschaltung der Bremsanforderung auch die Rückführung eingeleitet.

Es kann möglich sein, dass die Schritte eines erfindungsgemäßen Verfahrens zumindest teilweise, d. h. insbesondere die Erkennung und/oder Erfassung und/oder die Einstellung, durch einen BKV durchgeführt werden. Die Verantwortung für das Verbessern der störenden Akustik liegt damit beim verursachenden Bauteil, was technisch robuster und einfacher ist. Vorteilhafterweise ist der BKV elektrisch mit einem Steuergerät des Fahrzeuges verbunden, um die Bremsanforderung (ausgegeben durch das Steuergerät) und/oder die Abschaltung der Bremsanforderung zu erkennen. Die Bremsanforderung kann eine automatische Bremsanforderung sein, welche somit nicht vom Fahrer sondern automatisch insbesondere von einem Assistenzsystem des Fahrzeuges und/oder abhängig von einer Erfassung einer Umgebung des Fahrzeuges durch ein Radar des Fahrzeuges initiiert wird. Da hierbei das Abbremsen durch die Bremsanforderung automatisch bewirkt wird, ohne manuell initiiert worden zu sein, handelt es sich um ein autonomes Abbremsen.

Es kann vorgesehen sein, dass das autonome Abbremsen durch ein Fahrerassistenzsystem wie ein Adaptive Cruise Control (ACC, also ein Abstandsregeltempomat) und/oder einer radargeführten Bremsung bereitgestellt wird. Das Steuergerät kann z. B. Teil eines Bremssystems, insbesondere Bremsregelsystems, sein, welches zur Ausgabe der automatischen Bremsanforderung einen Sollwert an den BKV übermittelt. Dieser Sollwert dient zur Vorgabe der Stärke der Abbremsung, also insbesondere des Bremsdrucks. Auf Basis dieses Sollwertes kann der BKV dann die Bremskraft erzeugen und/oder das Bremspedal von einer Ausgangsstellung in eine Bremsstellung bewegen. Sobald der Sollwert die Abschaltung der Bremsanforderung indiziert, kann durch den BKV die Bremskraft weggenommen werden und die Rückführung des Bremspedals in die Ausgangsstellung eingeleitet werden. Der BKV kann dabei situationsabhängig (d. h. abhängig vom Situationsparameter) selbst entscheiden, ob eine Reduzierung der Geschwindigkeit der Rückführung zur Geräuschreduzierung erfolgt.

Vorteilhaft ist es zudem, wenn das Fahrzeug als ein Kraftfahrzeug, insbesondere gleisloses Landkraftfahrzeug, ausgebildet ist. So kann das Fahrzeug z. B. als ein Fahrzeug mit Brennkraftmaschine und/oder Hybridfahrzeug, das eine Brennkraftmaschine und eine Elektromaschine zur Traktion umfasst, oder als ein (reines) Elektrofahrzeug ausgebildet sein. Vorzugsweise kann das Fahrzeug mit einem Hochvolt-Bordnetz und/oder einem Elektromotor ausgeführt sein. Auch kann das Fahrzeug als ein Brennstoffzellenfahrzeug ausgebildet sein. Es kann sich weiter bei dem Fahrzeug um ein Personenkraftfahrzeug oder Lastkraftfahrzeug handeln. Bevorzugt ist bei Ausführungsformen von Elektrofahrzeugen kein Verbrennungsmotor beim Fahrzeug vorgesehen, es wird dann ausschließlich durch elektrische Energie angetrieben. Es ist denkbar, dass das Fahrzeug eine automatische Bremsfunktion aufweist, um ein autonomes Abbremsen des Fahrzeuges durchzuführen. Daneben kann ein manuelles Bremsen mittels eines Bremspedals möglich sein. Ein vollständiges Ausschalten der Bewegung des Bremspedals beim autonomen Abbremsen des Fahrzeuges kann ggf. nicht möglich sein. Somit kann es vorgesehen sein, dass prinzipbedingt das Bremspedal beim autonomen Abbremsen des Fahrzeuges immer mitbewegt wird. Allerdings ist es möglich, dass das Bremspedal durch das erfindungsgemäße Verfahren, insbesondere über eine Regelung eines BKV des Fahrzeuges, situationsabhängig mit verschiedenen Rücklaufgeschwindigkeiten (d. h. Geschwindigkeiten des Bremspedals bei der Rückführung) zurückgefahren wird.

Es kann vorgesehen sein, dass das Durchführen der Einstellung in der Art einer Regelung erfolgt, bei welcher der Situationsparameter als Reglerparameter verwendet wird. Die Geschwindigkeit der Rückführung kann hierbei als Regelgröße aufgefasst werden. Der Regler wird z. B. durch den BKV bereitgestellt. Abhängig von dem Situationsparameter und/oder der erkannten Abschaltung kann ein Umschalten des Reglerparameters für die Pedalrückführung initiiert werden. Eine aktuelle Situation des Fahrzeuges kann dabei anhand des Situationsparameters erkannt werden, und zu einem Umschalten wenigstens eines Reglerparameters des BKV für die Rückführung des Bremspedals führen. Bspw. wird bei einer manuellen Fahrerfußbremsung beim Lösen des Bremspedals dieses schneller zurückgefahren, um dem Fahrer ein gewohntes Gefühl der Bremsung zu vermitteln. Nach einer automatischen Bremsanforderung, z. B. einer automatischen Bremsung eines ACC in den Stillstand, kann das Bremspedal anschließend langsamer zurückgefahren werden, um die Akustik zu optimieren. In dieser Situation hat der Fahrer üblicherweise keinen Kontakt zum Bremspedal und/oder übt selbst keine Kraft darauf aus. Die Erkennung der Situation kann durch die Erfassung des wenigstens einen Situationsparameters mittels eines Auswertens von Fahrzeugsignalen erfolgen, wie bspw. eine Geschwindigkeit des Fahrzeuges, ein Fahrpedalwert und/oder ein ACC Anfahrwunsch.

Vorzugsweise kann vorgesehen sein, dass der wenigstens eine Situationsparameter zumindest den nachfolgenden Parameter umfasst:
- eine Geschwindigkeit des Fahrzeuges, insbesondere um das Bremspedal abhängig von der Geschwindigkeit des Fahrzeuges durch eine Bewegung in eine Ausgangsstellung zurückzuführen.

Die Geschwindigkeit wird als Situationsparameter z. B. von einem Kommunikationsbus des Fahrzeuges als digitaler Wert erfasst. Insbesondere kann der Verfahrensschritt der Einstellung derart ausgeführt werden, dass abhängig von dem Situationsparameter und/oder der Erkennung der Abschaltung eine Reduzierung der Geschwindigkeit der Rückführung (also insbesondere Rückstellung des Bremspedals) zur Geräuschreduzierung (der Geräusche bei der Rückführung des Bremspedals) erfolgt. Darunter ist zu verstehen, dass abweichend von einer Standardregelung der Geschwindigkeit der Rückführung in bestimmten Situationen eine geräuschreduzierte Rückführung, insbesondere in der Form einer geräuschreduzierten Regelung der Geschwindigkeit der Rückführung, erfolgt. Die Geräuschreduzierung kann durch die Reduzierung der Geschwindigkeit erreicht werden. Die Standardregelung kommt z. B. bei Geschwindigkeiten des Fahrzeuges zum Einsatz, welche oberhalb eines vordefinierten Schwellenwertes liegen. Bei diesen Geschwindigkeiten ist davon auszugehen, dass die Geräusche nicht als störend empfunden werden. Dagegen kann bei Geschwindigkeiten des Fahrzeuges unterhalb des Schwellenwertes die geräuschreduzierende Rückführung durchgeführt werden.

Es kann von Vorteil sein, wenn im Rahmen der Erfindung die Rückführung des Bremspedals entsprechend der Einstellung mit wenigstens zwei unterschiedlichen Geschwindigkeiten durchgeführt wird, welche bei höherer Geschwindigkeit des Fahrzeuges zunehmen. Somit kann wenigstens eine erste Geschwindigkeit bei der geräuschreduzierten Rückführung und wenigstens eine zweite Geschwindigkeit bei der übrigen Rückführung vorgesehen sein, wobei die wenigstens eine zweite Geschwindigkeit im Durchschnitt höher sein kann als die wenigstens eine erste Geschwindigkeit. Somit kann eine variable situationsabhängige Geschwindigkeitsanpassung vorgesehen sein. Eine dauerhafte Reduzierung der Geschwindigkeit, mit welcher die Rückführung des Bremspedals erfolgt, kann auf diese Weise vermieden werden. Insbesondere kann so vermieden werden, dass ein solcher dauerhaft langsame Pedalrücklauf zu einer ungewohnten Bedienung des Bremspedals führen würde ("Klebendes Pedal"). Daher hat die situationsabhängige Bremspedalrückführung mittels des BKV den Vorteil, dass die Geräusche des Bremspedals nur in solchen Situationen reduziert werden können, in denen sie auffallen und auch als störend empfunden werden. Dies ist insbesondere im Stillstand des Fahrzeuges oder bei langsamen Geschwindigkeiten des Fahrzeuges der Fall.

Auch ist es optional denkbar, dass der wenigstens eine Situationsparameter zusätzlich zumindest einen der nachfolgenden Parameter umfasst:
- einen Fahrpedalwert, vorzugsweise um das Bremspedal abhängig von einer Betätigung des Fahrpedals des Fahrzeuges und somit insbesondere abhängig von einem manuellen Anfahrwunsch zurückzuführen,
- einen Anfahrwunsch eines Assistenzsystems des Fahrzeuges, vorzugsweise um das Bremspedal abhängig von einem automatischen Anfahren des Fahrzeuges zurückzuführen.

Auf diese Weise kann verhindert werden, dass das für den Fahrer gewohnte Fahrverhalten negativ beeinflusst wird. Bspw. wird ein zu langsamer Bremsdruckabbau bei langsam zurücklaufendem Bremspedal und gleichzeitigem Anfahrwunsch verhindert.

Gemäß einer vorteilhaften Weiterbildung der Erfindung kann vorgesehen sein, dass das Durchführen der Erfassung den nachfolgenden Schritt umfasst:
- Erfassen eines Fahrzeugsignals über einen Kommunikationsbus, insbesondere CAN (Controller Area Network)-Bus, des Fahrzeuges, wobei das Fahrzeugsignal für den Situationsparameter spezifisch sein kann,
und insbesondere dass das Durchführen der Einstellung den nachfolgenden Schritt umfasst:
- Auswerten des erfassten Fahrzeugsignals, um einen Wert des Situationsparameters zu bestimmen, und vorzugsweise abhängig von dem Wert die Geschwindigkeit der Rückführung festzulegen.

Auf diese Weise ist es möglich, anhand der über den Kommunikationsbus übertragenen Fahrzeugsignale die aktuelle Situation des Fahrzeuges zuverlässig zu erkennen. Das erfindungsgemäße System kann hierzu eine entsprechende elektronische Kommunikationsschnittstelle zum Kommunikationsbus aufweisen.

Vorteilhaft ist es darüber hinaus, wenn im Rahmen der Erfindung die Rückführung des Bremspedals entsprechend der Einstellung mit wenigstens zwei unterschiedlichen Geschwindigkeiten durchgeführt wird, wobei die Rückführung mit einer ersten Geschwindigkeit erfolgen kann, wenn anhand des Situationsparameters ein Stillstand des Fahrzeuges festgestellt wird, und mit einer zweiten Geschwindigkeit erfolgen kann, wenn anhand des Situationsparameters eine Fortbewegung des Fahrzeuges festgestellt wird, wobei vorzugsweise die zweite Geschwindigkeit größer ist als die erste Geschwindigkeit. Insbesondere die zweite Geschwindigkeit kann oberhalb eines vordefinierten Schwellenwertes liegen, welcher bei der geräuschreduzierten Rückführung nicht durch die Geschwindigkeit des Bremspedals überschritten werden darf. Somit wird die Akustik für verschiedene Situationen optimiert.

Außerdem ist es von Vorteil, wenn die geräuschreduzierte Rückführung und/oder die Rückführung des Bremspedals entsprechend der Einstellung mit wenigstens zwei unterschiedlichen Geschwindigkeiten (insbesondere nur) dann durchgeführt wird, wenn die Rückführung als Reaktion auf die erkannte Abschaltung der automatischen Bremsanforderung erfolgt. Das vorangegangene Einleiten eines autonomen Bremsens und/oder die vorangegangene Ausgabe einer automatischen Bremsanforderung (also nicht manuell durch einen Fahrer initiiert) kann eine Einstiegsbedingung und damit eine Voraussetzung sein, damit eine geräuschreduzierte Rückführung durchgeführt wird und/oder damit die Geschwindigkeit der Rückführung abhängig von dem Situationsparameter angepasst wird. Die geräuschreduzierte Rückführung bzw. die Anpassung erfolgt z. B. dadurch, dass jede bei der Rückführung genutzte Geschwindigkeit von wenigstens einer Standardgeschwindigkeit auf wenigstens eine langsamere Geschwindigkeit umgestellt wird. Die wenigstens eine langsamere Geschwindigkeit umfasst bspw. als Geschwindigkeitsmaximum eine erste Geschwindigkeit, bei welcher eine störende Akustik beim Bremspedal zumindest reduziert ist. Die Standardgeschwindigkeit umfasst bspw. mindestens eine zweite Geschwindigkeit größer als die erste Geschwindigkeit, bei welcher die störende Akustik auftritt. Die Rückführung kann zumindest dann mit der Standardgeschwindigkeit erfolgen, wenn der Fahrer manuell das Bremspedal betätigt. Die Einstiegsbedingung kann konkret die Beendigung der automatischen Bremsanforderung sein, nach welcher das Bremspedal zurücklaufen würde.

Bevorzugt kann im Rahmen der Erfindung vorgesehen sein, dass vor dem Durchführen der Erkennung der Abschaltung durch eine automatische Bremsfunktion, insbesondere eines Fahrerassistenzsystems, des Fahrzeuges die nachfolgenden Schritte durchgeführt werden:
- Einschalten der automatischen Bremsanforderung, um eine autonome Abbremsung des Fahrzeuges durchzuführen,
- Abschalten der automatischen Bremsanforderung, um die autonome Abbremsung zu beenden, insbesondere wenn die autonome Abbremsung abgeschlossen wurde.

Ebenfalls Gegenstand der Erfindung ist ein System zur Rückführung eines Bremspedals bei einem Fahrzeug, aufweisend:
- eine Erkennungsvorrichtung zum Durchführen einer Erkennung einer Abschaltung einer automatischen Bremsanforderung,
- eine Erfassungsvorrichtung zum Durchführen einer Erfassung wenigstens eines Situationsparameters, welcher für eine aktuelle Situation des Fahrzeuges spezifisch ist,
- eine Einstellungsvorrichtung zum Durchführen einer Einstellung einer Geschwindigkeit der Rückführung des Bremspedals in Abhängigkeit von dem wenigstens einen erfassten Situationsparameter und der erkannten Abschaltung.

Damit bringt das erfindungsgemäße System die gleichen Vorteile mit sich, wie sie ausführlich mit Bezug auf ein erfindungsgemäßes Verfahren beschrieben worden sind. Zudem kann es vorgesehen sein, dass das System dazu ausgeführt ist, die Schritte eines erfindungsgemäßen Verfahrens auszuführen. Die Erkennungsvorrichtung und/oder die Erfassungsvorrichtung und/oder die Einstellungsvorrichtung können Teil einer Fahrzeugkomponente wie eines BKV sein, und insbesondere auch gemeinsame Teile, vorzugsweise Elektronikbausteine, aufweisen. Die Elektronikbausteine können wenigstens eine Verarbeitungsvorrichtung z. B. in der Form eines integrierten Schaltkreises aufweisen. Ferner kann das erfindungsgemäße System optional ein Steuergerät und/oder einen Kommunikationsbus aufweisen.

Das erfindungsgemäße Verfahren kann als Softwarelösung ausgeführt sein. Entsprechend kann ein Computerprogramm vorgesehen sein, welches Befehle aufweist, die bei der Ausführung durch eine Verarbeitungsvorrichtung (insbesondere des BKV) diese zur Ausführung der Verfahrensschritte des erfindungsgemäßen Verfahrens veranlasst.

Weitere Vorteile, Merkmale und Einzelheiten der Erfindung ergeben sich aus der nachfolgenden Beschreibung, in der unter Bezugnahme auf die Figuren Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine schematische Darstellung von Verfahrensschritten,
- Figur 2: eine schematische Darstellung eines erfindungsgemäßen Systems,
- Figur 3: eine weitere schematische Darstellung von Verfahrensschritten.

In den nachfolgenden Figuren werden für die gleichen technischen Merkmale auch von unterschiedlichen Ausführungsbeispielen die identischen Bezugszeichen verwendet.

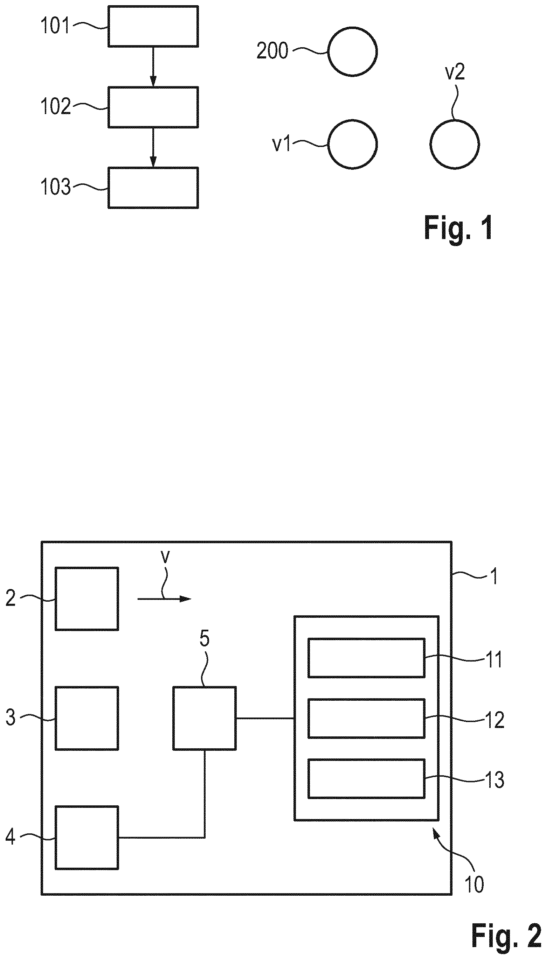

In Figur 1 ist schematisch ein erfindungsgemäßes Verfahren zur Rückführung eines Bremspedals 2 bei einem Fahrzeug 1 visualisiert. Gemäß einem ersten Verfahrensschritt erfolgt dabei ein Durchführen einer Erkennung 101 einer Abschaltung einer automatischen Bremsanforderung. Anschließend kann gemäß einem zweiten Verfahrensschritt ein Durchführen einer Erfassung 102 wenigstens eines Situationsparameters 200 erfolgen, welcher für eine aktuelle Situation des Fahrzeuges 1 spezifisch ist. Gemäß einem dritten Verfahrensschritt kann danach ein Durchführen einer Einstellung 103 einer Geschwindigkeit v der Rückführung des Bremspedals 2 in Abhängigkeit von dem wenigstens einen erfassten Situationsparameter 200 und der erkannten Abschaltung vorgesehen sein.

In Figur 2 sind schematisch Teile eines erfindungsgemäßen Systems 10 zur Rückführung eines Bremspedals 2 bei einem Fahrzeug 1 dargestellt. Es kann eine Erkennungsvorrichtung 11 zum Durchführen der Erkennung 101 der Abschaltung der automatischen Bremsanforderung vorgesehen sein. Weiter kann eine Erfassungsvorrichtung 12 zum Durchführen der Erfassung 102 des wenigstens einen Situationsparameters 200 Teil des Systems 10 sein. Darüber hinaus ist auch eine Einstellungsvorrichtung 13 Teil des Systems 10. Diese dient zur Einstellung 103 der Geschwindigkeit v der Rückführung des Bremspedals 2 in Abhängigkeit von dem wenigstens einen erfassten Situationsparameter 200 und der erkannten Abschaltung. Das System 10 kann dazu ausgeführt sein, die Schritte eines erfindungsgemäßen Verfahrens auszuführen.

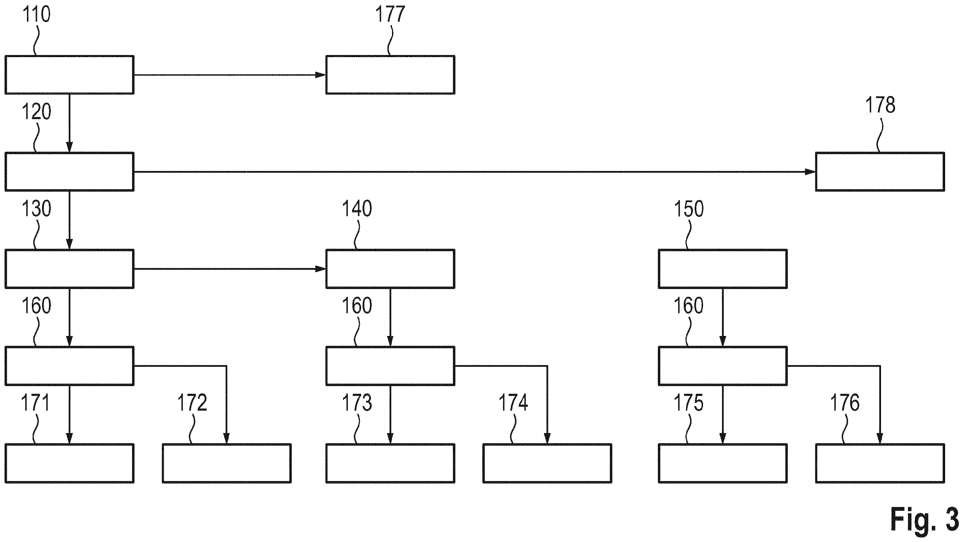

In Figur 3 ist eine beispielhafte Ausführung des erfindungsgemäßen Verfahrens dargestellt, bei welcher die Rückführung des Bremspedals 2 entsprechend der Einstellung 103 mit wenigstens zwei unterschiedlichen Geschwindigkeiten v1, v2 durchgeführt wird. Die Einstellung 103 erfolgt derart, dass die Geschwindigkeiten v1, v2 des Bremspedals 2 bei höherer Geschwindigkeit des Fahrzeuges 1 zunehmen. Gemäß einem ersten Schritt 110 erfolgt eine Einstiegsbedingungsprüfung. Diese umfasst die Prüfung, ob die automatische Bremsanforderung abgeschaltet wurde. Damit ist die Einstiegsbedingung z. B. eine Beendigung einer externen Bremsanforderung (also einer automatischen Bremsfunktion, insbesondere eines Fahrerassistenzsystems 4), nach welcher das Bremspedal 2 zurücklaufen muss. Somit wird die Rückführung des Bremspedals 2 entsprechend der Einstellung 103 mit wenigstens zwei unterschiedlichen Geschwindigkeiten v1, v2 nur dann durchgeführt, wenn die Rückführung als Reaktion auf die erkannte Abschaltung der automatischen Bremsanforderung erfolgt. Sollte die Einstiegsbedingung nicht erfüllt sein, also bspw. die Abbremsung manuell initiiert worden sein, erfolgt der Schritt 177, bei welchem eine höhere Geschwindigkeit für die Rückführung eingestellt wird (bspw. eine vordefinierte "Rückfahrgeschwindigkeit 7"). Andernfalls erfolgt gemäß Schritt 120 eine Prüfung auf einen automatischen Anfahrwunsch. Damit umfasst der Situationsparameter 200 auch einen Anfahrwunsch eines Assistenzsystems 4 des Fahrzeuges 1, um das Bremspedal 2 abhängig von einem automatischen Anfahren des Fahrzeuges 1 zurückzuführen. Falls hierbei der Anfahrwunsch des automatischen Anfahrens erkannt wird, erfolgt der Schritt 178, bei welchem eine höhere Geschwindigkeit für die Rückführung eingestellt wird (bspw. eine vordefinierte "Rückfahrgeschwindigkeit 6"). Andernfalls erfolgt im Schritt 130 die Prüfung, ob die aktuelle Geschwindigkeit des Fahrzeuges 1 unterhalb einer ersten Geschwindigkeitsschwelle liegt. Falls dies der Fall ist, liegt bspw. ein Stillstand des Fahrzeuges 1 vor. Dann erfolgt eine Prüfung 160, ob ein manueller Anfahrwunsch des Fahrers vorliegt. Falls ja, wird Schritt 171 durchgeführt, bei welchem eine höhere Geschwindigkeit für die Rückführung eingestellt wird (bspw. eine vordefinierte "Rückfahrgeschwindigkeit 1"). Falls nein, wird Schritt 172 durchgeführt, bei welchem eine niedrigere Geschwindigkeit für die Rückführung eingestellt wird (bspw. eine vordefinierte "Rückfahrgeschwindigkeit 2"). Entsprechend wird hierbei der Vorteil genutzt, dass die niedrigere Geschwindigkeit geringer ist als die höhere Geschwindigkeit, um störende Geräusche bei der Bewegung des Bremspedals zu verringern.

Falls bei Schritt 130 festgestellt wird, dass die Geschwindigkeit des Fahrzeuges 1 oberhalb der ersten Geschwindigkeitsschwelle liegt, wird Schritt 140 durchgeführt. Bei Schritt 140 wird geprüft, ob die aktuelle Geschwindigkeit des Fahrzeuges 1 im Bereich zwischen der ersten und einer zweiten Geschwindigkeitsschwelle liegt. Gemäß Schritt 150 würde die Geschwindigkeit des Fahrzeuges 1 oberhalb der zweiten Geschwindigkeitsschwelle liegen. In beiden Fällen wird auch die Prüfung 160 durchgeführt, ob ein manueller Anfahrwunsch vorliegt. Falls ja, werden die Geschwindigkeiten für die Rückführung gemäß Schritt 173 bzw. 175 eingestellt ("Rückfahrgeschwindigkeit 3" bzw. "5"). Andernfalls werden Geschwindigkeiten für die Rückführung gemäß Schritt 174 bzw. 176 eingestellt ("Rückfahrgeschwindigkeit 4" bzw. "6"). Mittels der Prüfungen 110, 120, 130, 140, 150, 160 wird somit eine aktuelle Situation des Fahrzeuges 1 identifiziert, welche schließlich die Einstellung der Geschwindigkeit der Rückführung beeinflusst. Sämtliche Rückfahrgeschwindigkeiten können dabei flexibel je nach Wunschverhalten der Rückführung so vordefiniert sein, dass diese sich unterscheiden oder zumindest teilweise auch gleich sind.

Die Prüfung 160 des manuellen Anfahrwunsches kann z. B. dadurch erfolgen, dass der wenigstens eine Situationsparameter 200 zusätzlich zumindest einen Fahrpedalwert umfasst, um das Bremspedal 2 abhängig von einer (manuellen) Betätigung des Fahrpedals 3 des Fahrzeuges 1 zurückzuführen. Ferner können die Prüfungen dadurch ermöglicht sein, dass das Durchführen der Erfassung 102 den Schritt umfasst, dass ein Fahrzeugsignal über einen Kommunikationsbus 5 des Fahrzeuges 1 erfasst wird, welches für den Situationsparameter 200 spezifisch ist.

Die voranstehende Erläuterung der Ausführungsformen beschreibt die vorliegende Erfindung ausschließlich im Rahmen von Beispielen.

### Bezugszeichenliste

- 1: Fahrzeug
- 2: Bremspedal
- 3: Fahrpedal
- 4: Assistenzsystem, Fahrerassistenzsystem
- 5: Kommunikationsbus

- 10: System
- 11: Erkennungsvorrichtung
- 12: Erfassungsvorrichtung
- 13: Einstellungsvorrichtung

- 101: Erkennung
- 102: Erfassung
- 103: Einstellung
- 110: Einstiegsbedingungsprüfung

- 120: Prüfung automatischer Anfahrwunsch
- 130: Prüfung erste Geschwindigkeitsschwelle

- 140: Prüfung erste und zweite Geschwindigkeitsschwelle
- 150: Prüfung zweite Geschwindigkeitsschwelle

- 160: Prüfung manueller Anfahrwunsch

- 200: Situationsparameters

- 171 - 178: Einstellung unterschiedlicher Rückführungsgeschwindigkeiten
- v: Geschwindigkeit
- v1: erste Geschwindigkeit
- v2: zweite Geschwindigkeit

## Patentansprüche

1. Verfahren zur Rückführung eines Bremspedals (2) bei einem Fahrzeug (1), wobei die nachfolgenden Schritte durchgeführt werden:
- Durchführen einer Erkennung (101) einer Abschaltung einer automatischen Bremsanforderung,
- Durchführen einer Erfassung (102) wenigstens eines Situationsparameters (200), welcher für eine aktuelle Situation des Fahrzeuges (1) spezifisch ist,
- Durchführen einer Einstellung (103) einer Geschwindigkeit (v) der Rückführung des Bremspedals (2) in Abhängigkeit von dem wenigstens einen erfassten Situationsparameter (200) und der erkannten Abschaltung.

2. Verfahren nach Anspruch 1,
**dadurch gekennzeichnet,**
**dass** der wenigstens eine Situationsparameter (200) zumindest den nachfolgenden Parameter umfasst:
- eine Geschwindigkeit des Fahrzeuges (1), um das Bremspedal (2) abhängig von der Geschwindigkeit des Fahrzeuges (1) durch eine Bewegung in eine Ausgangsstellung zurückzuführen.

3. Verfahren nach Anspruch 2,
**dadurch gekennzeichnet,**
**dass** die Rückführung des Bremspedals (2) entsprechend der Einstellung (103) mit wenigstens zwei unterschiedlichen Geschwindigkeiten (v1, v2) durchgeführt wird, welche bei höherer Geschwindigkeit des Fahrzeuges (1) zunehmen.

4. Verfahren nach Anspruch 2 oder 3,
**dadurch gekennzeichnet,**
**dass** der wenigstens eine Situationsparameter (200) zusätzlich zumindest einen der nachfolgenden Parameter umfasst:
- einen Fahrpedalwert, um das Bremspedal (2) abhängig von einer Betätigung des Fahrpedals (3) des Fahrzeuges (1) zurückzuführen,
- einen Anfahrwunsch eines Assistenzsystems (4) des Fahrzeuges (1), um das Bremspedal (2) abhängig von einem automatischen Anfahren des Fahrzeuges (1) zurückzuführen.

5. Verfahren nach einem der vorhergehenden Ansprüche,
**dadurch gekennzeichnet,**
**dass** das Durchführen der Erfassung (102) den nachfolgenden Schritt umfasst:
- Erfassen eines Fahrzeugsignals über einen Kommunikationsbus (5) des Fahrzeuges (1), welches für den Situationsparameter (200) spezifisch ist,
und **dass** das Durchführen der Einstellung (103) den nachfolgenden Schritt umfasst:
- Auswerten des erfassten Fahrzeugsignals, um einen Wert des Situationsparameters (200) zu bestimmen, und abhängig von dem Wert die Geschwindigkeit (v) der Rückführung festzulegen.

6. Verfahren nach einem der vorhergehenden Ansprüche,
**dadurch gekennzeichnet,**
**dass** die Rückführung des Bremspedals (2) entsprechend der Einstellung (103) mit wenigstens zwei unterschiedlichen Geschwindigkeiten (v1, v2) durchgeführt wird, wobei die Rückführung mit einer ersten Geschwindigkeit (v1) erfolgt, wenn anhand des Situationsparameters (200) ein Stillstand des Fahrzeuges (1) festgestellt wird, und mit einer zweiten Geschwindigkeit (v2) erfolgt, wenn anhand des Situationsparameters (200) eine Fortbewegung des Fahrzeuges (1) festgestellt wird, wobei die zweite Geschwindigkeit (v2) größer ist als die erste Geschwindigkeit (v1).

7. Verfahren nach einem der vorhergehenden Ansprüche,
**dadurch gekennzeichnet,**
**dass** die Rückführung des Bremspedals (2) entsprechend der Einstellung (103) mit wenigstens zwei unterschiedlichen Geschwindigkeiten (v1, v2) nur dann durchgeführt wird, wenn die Rückführung als Reaktion auf die erkannte Abschaltung der automatischen Bremsanforderung erfolgt.

8. Verfahren nach einem der vorhergehenden Ansprüche,
**dadurch gekennzeichnet,**
**dass** vor dem Durchführen der Erkennung (101) der Abschaltung durch eine automatische Bremsfunktion des Fahrzeuges (1) die nachfolgenden Schritte durchgeführt werden:
- Einschalten der automatischen Bremsanforderung, um eine autonome Abbremsung des Fahrzeuges (1) durchzuführen,
- Abschalten der automatischen Bremsanforderung, um die autonome Abbremsung zu beenden.

9. System (10) zur Rückführung eines Bremspedals (2) bei einem Fahrzeug (1), aufweisend:
- eine Erkennungsvorrichtung (11) zum Durchführen einer Erkennung (101) einer Abschaltung einer automatischen Bremsanforderung,
- eine Erfassungsvorrichtung (12) zum Durchführen einer Erfassung (102) wenigstens eines Situationsparameters (200), welcher für eine aktuelle Situation des Fahrzeuges (1) spezifisch ist,
- eine Einstellungsvorrichtung (13) zum Durchführen einer Einstellung (103) einer Geschwindigkeit (v) der Rückführung des Bremspedals (2) in Abhängigkeit von dem wenigstens einen erfassten Situationsparameter (200) und der erkannten Abschaltung.

10. System (10) nach Anspruch 9,
**dadurch gekennzeichnet,**
**dass** das System (10) dazu ausgeführt ist, die Schritte eines Verfahrens nach einem der Ansprüche 1 bis 8 auszuführen.

## Claims

1. Method for retracting a brake pedal (2) in a vehicle (1), wherein the following steps are carried out:
- carrying out identification (101) of deactivation of an automatic braking request,
- carrying out detection (102) of at least one situation parameter (200), which is specific to a current situation of the vehicle (1),
- carrying out adjustment (103) of a speed (v) of the retraction of the brake pedal (2) depending on the at least one detected situation parameter (200) and the identified deactivation.

2. Method according to Claim 1,
**characterized**
**in that** the at least one situation parameter (200) comprises at least the following parameter:
- a speed of the vehicle (1) in order to return the brake pedal (2) depending on the speed of the vehicle (1) by a movement to a starting position.

3. Method according to Claim 2,
**characterized**
**in that** the retraction of the brake pedal (2) is carried out in accordance with the adjustment (103) at at least two different speeds (v1, v2), which increase at a higher speed of the vehicle (1).

4. Method according to Claim 2 or 3,
**characterized**
**in that** the at least one situation parameter (200) additionally comprises at least one of the following parameters:
- an accelerator pedal value in order to return the brake pedal (2) depending on operation of the accelerator pedal (3) of the vehicle (1),
- a drive-off request of an assistance system (4) of the vehicle (1) in order to return the brake pedal (2) depending on automatic driving-off by the vehicle (1).

5. Method according to one of the preceding claims, **characterized**
**in that** carrying out the detection (102) comprises the following step:
- detecting a vehicle signal via a communication bus (5) of the vehicle (1), which vehicle signal is specific to the situation parameter (200),
and **in that** carrying out the adjustment (103) comprises the following step:
- evaluating the detected vehicle signal in order to determine a value of the situation parameter (200), and defining the speed (v) of the retraction depending on the value.

6. Method according to one of the preceding claims, **characterized**
**in that** the retraction of the brake pedal (2) is carried out in accordance with the adjustment (103) at at least two different speeds (v1, v2), wherein the retraction is performed at a first speed (v1) when a stationary state of the vehicle (1) is established on the basis of the situation parameter (200), and is performed at a second speed (v2) when forward movement of the vehicle (1) is established on the basis of the situation parameter (200), wherein the second speed (v2) is greater than the first speed (v1).

7. Method according to one of the preceding claims, **characterized**
**in that** retraction of the brake pedal (2) is carried out in accordance with the adjustment (103) at at least two different speeds (v1, v2) only when the retraction is performed in response to the identified deactivation of the automatic braking request.

8. Method according to one of the preceding claims, **characterized**
**in that**, before carrying out identification (101) of the deactivation by an automatic braking function of the vehicle (1), the following steps are carried out:
- activating the automatic braking request in order to carry out autonomous braking of the vehicle (1),
- deactivating the automatic braking request in order to terminate autonomous braking.

9. System (10) for retracting a brake pedal (2) in a vehicle (1), having:
- an identification device (11) for carrying out identification (101) of deactivation of an automatic braking request,
- a detection device (12) for carrying out detection (102) of at least one situation parameter (200), which is specific to a current situation of the vehicle (1),
- an adjustment device (13) for carrying out adjustment (103) of a speed (v) of the retraction of the brake pedal (2) depending on the at least one detected situation parameter (200) and the identified deactivation.

10. System (10) according to Claim 9,
**characterized**
**in that** the system (10) is designed to execute the steps of a method according to one of Claims 1 to 8.

## Revendications

1. Procédé de rappel d'une pédale de frein (2) sur un véhicule (1), dans lequel on met en œuvre les étapes suivantes :
- réalisation d'une détection (101) d'une coupure d'une demande de freinage automatique,
- réalisation d'une détection (102) d'au moins un paramètre de situation (200) spécifique à une situation courante du véhicule (1),
- réalisation d'un réglage (103) d'une vitesse (v) de rappel de la pédale de frein (2) en fonction dudit au moins un paramètre de situation (200) détecté et de la coupure détectée.

2. Procédé selon la revendication 1,
**caractérisé en ce que**
ledit au moins un paramètre de situation (200) comprend au moins le paramètre suivant :
- une vitesse du véhicule (1), pour ramener la pédale de frein (2) dans une position initiale par un mouvement dépendant de la vitesse du véhicule (1).

3. Procédé selon la revendication 2,
**caractérisé en ce que**
le retour de la pédale de frein (2) est effectué selon le réglage (103) à au moins deux vitesses différentes (v1, v2) qui augmentent lorsque la vitesse du véhicule (1) augmente.

4. Procédé selon la revendication 2 ou 3,
**caractérisé en ce que**
ledit au moins un paramètre de situation (200) comprend en outre au moins un des paramètres suivants :
- une valeur de pédale d'accélérateur, pour rappeler la pédale de frein (2) en fonction d'un actionnement de la pédale d'accélérateur (3) du véhicule (1),
- une demande de démarrage d'un système d'assistance (4) du véhicule (1), pour rappeler la pédale de frein (2) en fonction d'un démarrage automatique du véhicule (1).

5. Procédé selon l'une quelconque des revendications précédentes,
**caractérisé en ce que**
la mise en œuvre de la détection (102) comprend l'étape suivante :
- l'acquisition, via un bus de communication (5) du véhicule (1), d'un signal de véhicule spécifique au paramètre de situation (200),
et **en ce que** la mise en œuvre du réglage (103) comprend l'étape suivante :
- évaluer le signal de véhicule détecté pour déterminer une valeur du paramètre de situation (200) et, en fonction de la valeur, déterminer la vitesse (v) du rappel.

6. Procédé selon l'une des revendications précédentes, **caractérisé en ce que**
le rappel de la pédale de frein (2) est effectué selon le réglage (103) à au moins deux vitesses différentes (v1, v2), le rappel étant effectué à une première vitesse (v1), lorsqu'un arrêt du véhicule (1) est constaté à l'aide du paramètre de situation (200), et avec une deuxième vitesse (v2) lorsqu'un déplacement du véhicule (1) est constaté à l'aide du paramètre de situation (200), la deuxième vitesse (v2) étant supérieure à la première vitesse (v1).

7. Procédé selon l'une quelconque des revendications précédentes,
**caractérisé en ce que**
le rappel de la pédale de frein (2) selon le réglage (103) est effectué à au moins deux vitesses différentes (v1, v2) uniquement lorsque le rappel est effectué en réponse à la coupure détectée de la demande de freinage automatique.

8. Procédé selon l'une des revendications précédentes, **caractérisé en ce que**,
avant de réaliser la détection (101) de la coupure par une fonction de freinage automatique du véhicule (1), on réalise les étapes suivantes :
- activation de la demande de freinage automatique pour réaliser un freinage autonome du véhicule (1),
- désactivation de la demande de freinage automatique pour mettre fin au freinage autonome.

9. Système (10) de rappel d'une pédale de frein (2) sur un véhicule (1), comprenant :
- un dispositif de détection (11) pour effectuer une détection (101) d'une coupure d'une demande de freinage automatique,
- un dispositif de détection (12) pour effectuer une détection (102) d'au moins un paramètre de situation (200) spécifique à une situation courante du véhicule (1),
- un dispositif de réglage (13) pour effectuer un réglage (103) d'une vitesse (v) de rappel de la pédale de frein (2) en fonction dudit au moins un paramètre de situation (200) détecté et de la coupure détectée.

10. Système (10) selon la revendication 9,
**caractérisé en ce que**
le système (10) est adapté pour mettre en œuvre les étapes d'un procédé selon l'une quelconque des revendications 1 à 8.
